# EUROPÄISCHE PATENTSCHRIFT

(11) **EP 3 263 616 B1**
(45) Veröffentlichungstag und Bekanntmachung des Hinweises auf die Patenterteilung: **04.12.2019**
(21) Anmeldenummer: 16176309.9
(22) Anmeldetag: 27.06.2016
(51) Int. Cl.: C08G 18/71, C07F 7/18, C08G 18/75, C08G 18/80, C08G 18/22, C08G 18/24, C08G 18/32, C08G 18/38, C08G 18/73, C08G 18/28

(54) **ALKOXYSILAN-FUNKTIONALISIERTE ALLOPHANAT-HALTIGE BESCHICHTUNGSMITTEL**
ALKOXYSILANE FUNCTIONALIZED ALLOPHANATE-CONTAINING COATING AGENT
MOYENS DE REVÊTEMENT FONCTIONNALISÉS PAR UN ALKOXYSILANE ET CONTENANT UN ALLOPHANATE

(43) Veröffentlichungstag der Anmeldung: 03.01.2018
(73) Patentinhaber: Evonik Degussa GmbH, 45128 Essen (DE)
(72) Erfinder: STACHE, Wiebke, 45699 Herten (DE); UNKELHÄUSSER, Tobias, 48249 Dülmen (DE); SPYROU, Emmanouil, 46514 Schermbeck (DE); LILIENTHAL, Annegret, 46282 Dorsten (DE); KLAWIKOWSKI, Ralf, 45665 Recklinghausen (DE); NAUMANN, Sabine, 44651 Herne (DE); BUCHCZIK, Bartholomäus, 45772 Marl (DE)
(74) Vertreter: Evonik Patent Association

(56) Entgegenhaltungen:
- US-A1- 2010 247 929

## Beschreibung

Die vorliegende Erfindung betrifft Alkoxysilan-funktionalisierte Allophanat-haltige Beschichtungsmittel, ein Verfahren zur ihrer Herstellung, und ihre Verwendung.

Polyurethane haben sich seit vielen Jahrzehnten als hochwertige Bausteine für Lack-, Klebstoff-, Dichtstoff- und Kunststoffsysteme erwiesen. Dabei können zusätzliche Alkoxysilangruppen hier eine wichtige Rolle z. B. in Hinblick auf Netzwerkdichte, Chemikalienbeständigkeit und Kratzfestigkeit spielen, in erster Linie durch die Ausbildung von Siloxan- und Polysiloxanstrukturen.

Moleküle, die sowohl über Alkoxysilangruppen verfügen, als auch Isocyanatgruppen aufweisen, bieten die Möglichkeit, die als Reaktionsprodukte resultierende Funktionalitäten, Siloxane und Polyurethangruppen, durch eine Komponente einzufügen. Auch solche Substanzen sind schon lange in Gebrauch, z. B. in Form von Isocyanatoalkyltrialkoxysilanen.

Aus Isocyanatoalkyltrialkoxysilanen und Alkoholen hergestellte Ikoxysilan-terminierte Polyurethane sind ebenfalls bekannt und werden beispielsweise für die Herstellung hochvernetzter, harter Beschichtungsmitteln (z.B. EP2676982A1) eingesetzt. Die in EP2676982A1 beschriebenen Alkoxysilan-haltigen Beschichtungsmittel sind aber nachteilig, weil sie nur kurze Topfzeiten besitzen.

Allophanat-haltige Bindemittel sind lange bekannt. Auch Alkoxysilan-funktionalisierten Allophanate sind bekannt. Hier gilt es verschiedene Typen zu unterscheiden, die im Folgenden dargestellt werden, aber weder in der Struktur noch der Anwendung der im erfindungsgemäßen Alkoxysilan-funktionalisierten Allophanat-haltigen Beschichtungsmittel enthaltenen Alkoxysilan-funktionalisierten Allophanat entsprechen.

So werden die in WO2008/043722 beschriebenen Allophanate III (1) durch Umsetzung NCOterminierter allophanathaltige Polyurethane I (1) mit gegenüber Isocyanat reaktiven Alkoxysilanen II (1) (z.B. Aminoalkyltrialkoxysilan) erhalten. Die Allophanat-Gruppen befinden sich hier somit im Zentrum der Polyurethankette und die Alkoxysilanfunktion ist über die terminale Isocyanat-Gruppe im Rahmen einer Harnstoff-Funktion angebunden (Struktur III (1), Gleichung 1).

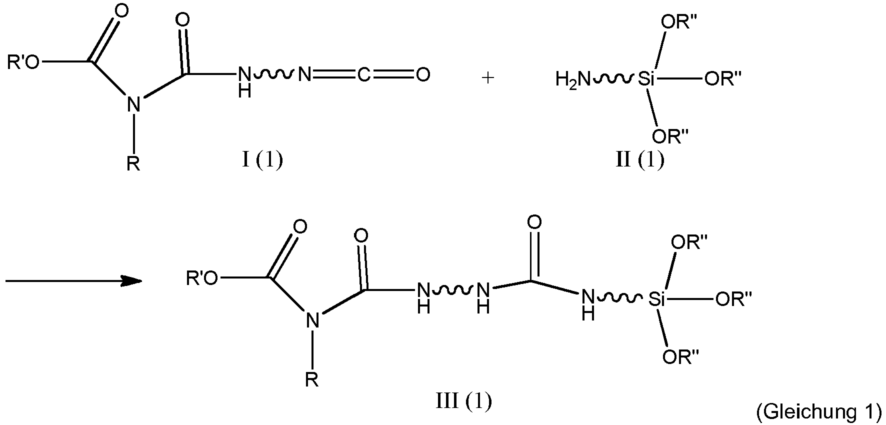

DE102005041953 beschreibt die Umsetzung eines Polyols I (2) mit einem mittleren Molekulargewicht von 3000 - 20000 g/Mol mit einem Überschuss von Isocyanatopropyltrimethoxysilan II (2), so dass es nach der Polyurethanbildung III (2) zu Bildung eines Allophanates IV (2) mit zwei Alkoxysilanfunktionen pro Allophanateinheit kommt.

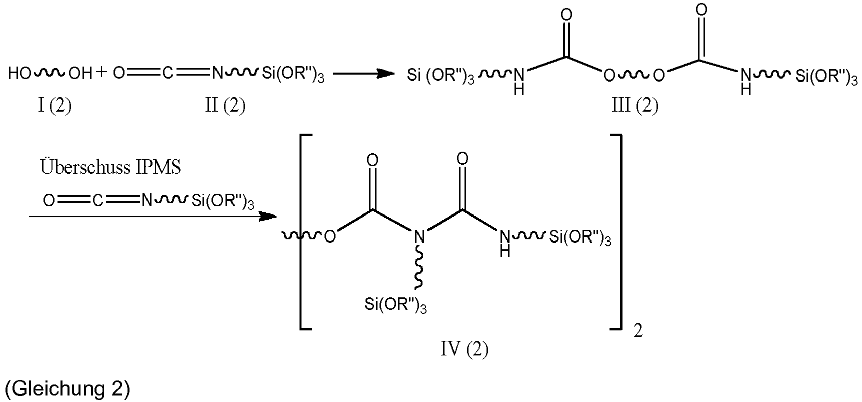

In DE102005041954 wird ein Polyurethan I (3) mit Isocyanatopropyltrimethoxysilan II (3) versetzt und so lange erhitzt bis sich Allophanatstrukturen ausbilden. In diesem Fall wird die Alkoxysilangruppe an dem terminalen Stickstoff der Allophanat-Gruppe III (3) angebaut (Gleichung 3).

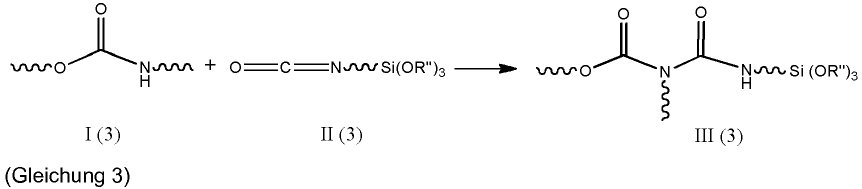

J. Kozakiewicz et al. publizierten in Progress in Organic Coatings 72 (2011) 120-130 die Umsetzung von Isocyanatopropyltrimethoxysilan I (4) mit Methanol zum entsprechenden Urethan II (4) und anschließend mit Hexamethylendiisocyanat-Trimer III (4). Bei dem hieraus resultierenden hochviskosen Allophanat IV (4) hängt die Alkoxysilanfunktion an dem tertiären, zentralen Amin der Allophanat-Gruppe (Gleichung 4).

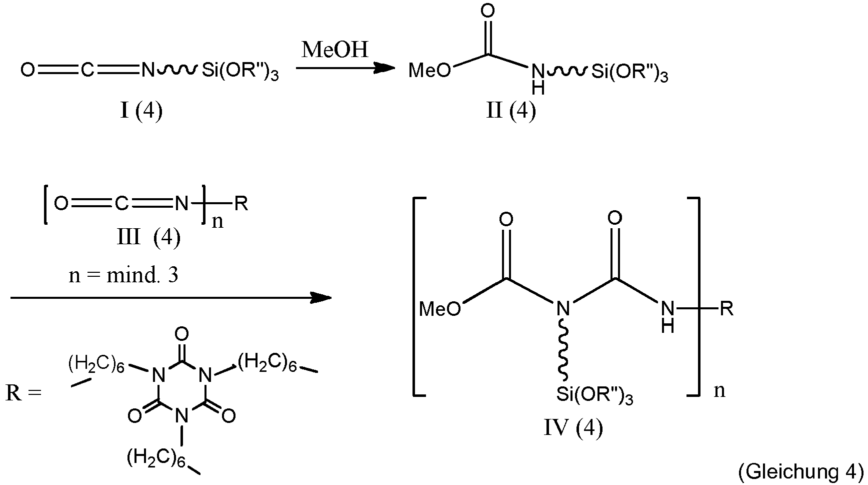

Die Allophanat-Funktion dient in der beschriebenen Anwendung als Blockierungsmittel für das Hexamethylendiisocyanat-Trimer, welches als Vernetzer für Hydroxy-funktionalisierte Polyesterpolyole eingesetzt wurde.

Auch heute besteht ein Bedarf an neuen silanhaltigen Beschichtungsmittel n, die über spezielle Eigenschaften verfügen.

Die in EP2676982A1 beschriebenen alkoxysilan-haltigen Bindemittel sind nachteilig, weil sie nur kurze Topfzeiten besitzen.

Aufgabe dieser Erfindung war es, neue silanhaltige Beschichtungsmittel zugänglich zu machen, die für die Entwicklung hochvernetzter, harter Beschichtungen geeignet sind und sich durch verlängerte Topfzeit auszeichnen.

Diese Aufgabe wird durch Alkoxysilan-funktionalisierte Allophanat-haltige Beschichtungsmittel gemäß der vorliegenden Erfindung gelöst.

Überraschenderweise wurde gefunden, dass die erfindungsgemäßen Alkoxysilan-funktionalisierten Allophanat-haltigen Beschichtungsmittel für die Anwendung als Lack-, Klebstoff- oder Dichtstoff geeignet sind. Insbesondere können die erfindungsgemäße Alkoxysilan-funktionalisierte Allophanat-haltige Beschichtungsmittel für die Entwicklung hochvernetzter, besonders harter Beschichtungen mit guter Haftung eingesetzt werden. Zudem zeichnen sich die erfindungsgemäßen Alkoxysilan-funktionalisierte Allophanat-haltige Beschichtungsmittel, die die erfindungsgemäße Alkoxysilan-funktionalisierte Allophanat-haltige Bindemittelkomponente a) enthalten, durch eine lange Topfzeit aus.

Gegenstand der Erfindung sind Alkoxysilan-funktionalisierte Allophanat-haltige Beschichtungsmittel enthaltend
a) 10-99 Gew.-% wenigstens einer Bindemittelkomponente aus dem Reaktionsprodukt von
   i) Alkoxysilangruppen haltigen Monourethanen i) der Formel 1

      Rₙ(OR¹)₃₋ₙSi-R²-NH-(C=O)-OR³ Formel 1

      wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
      und
   ii) mindestens einem Diisocyanat ii),
   in einem Mol-Verhältnis von i) zu ii) von 3:1 bis 1,5 :1, bevorzugt 2,5 :1 bis 1,8 :1, besonders bevorzugt 2:1;
b) 1-90 Gew.-% wenigstens eine Bindemittelkomponente, bevorzugt ein hydroxylgruppenhaltiges oder amingruppenhaltiges Bindemittel,
c) 0-50 Gew.-% wenigstens ein aromatisches, aliphatisches oder cycloaliphatisches Polyisocyanat, das eine NCO-Funktionalität von wenigstens 2, bevorzugt 2,8 bis 6 aufweist,
d) 0-5 Gew.-% wenigstens einen Katalysator,
   wobei sich die Komponenten a)-d) zu 100 Gew.-% addieren,
e) optional Hilfsstoffstoffe und/oder Zusatzstoff,
f) optional Lösungsmittel.

Bevorzugter Gegenstand der Erfindung sind Alkoxysilan-funktionalisierte Allophanat-haltige Beschichtungsmittel bestehend aus
a) 10-99 Gew.-% wenigstens einer Bindemittelkomponente aus dem Reaktionsproduckt von
   i) Alkoxysilangruppen haltigen Monourethanen i) der Formel 1

      Rₙ(OR¹)₃₋ₙSi-R²-NH-(C=O)-OR³ Formel 1

      wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
      und
   ii) mindestens einem Diisocyanat ii),
   in einem Mol-Verhältnis von i) zu ii) von 3:1 bis 1,5:1, bevorzugt 2,5:1 bis 1,8:1, besonders bevorzugt 2:1;
b) 1-90 Gew.-% wenigstens eine Bindemittelkomponente, bevorzugt ein hydroxylgruppenhaltiges oder amingruppenhaltiges Bindemittel,
c) 0-50 Gew.-% wenigstens ein aromatisches, aliphatisches oder cycloaliphatisches Polyisocyanat, das eine NCO-Funktionalität von wenigstens 2, bevorzugt 2,8 bis 6 aufweist,
d) 0-5 Gew.% wenigstens einen Katalysator,
e) wobei sich die Komponenten a)-d) zu 100 Gew.-% addieren,
f) optional Hilfsstoffstoffe und/oder Zusatzstoff,
g) optional Lösungsmittel.

In einer bevorzugten Ausführungsform handelt es sich bei dem erfindungsgemäßen Beschichtungsmittel um ein nicht wässriges Beschichtungsmittel. In einer besonders bevorzugten Ausführungsform bedeutet der Begriff "nicht wässrig", wie hierin verwendet, dass das erfindungsgemäße Beschichtungsmittel bezogen auf die Summe der Komponenten a)-f) einen Wasseranteil von nicht mehr als 3 Gewichtsprozent, bevorzugt nicht mehr als 1 Gewichtsprozent aufweist. In einer besonders bevorzugten Ausführungsform ist das erfindungsgemäße Beschichtungsmittel frei von Wasser.

Die Komponente a) ist zu 10 bis 99 Gew.-%, bevorzugt zu 10 bis 70 Gew.-% , bezogen auf die Summe der Komponenten a), b), ggf. c) und d), in dem erfindungsgemäßen Beschichtungsmittel enthalten.

Die Alkoxysilan-funktionalisierte Allophanat-haltigen Beschichtungsmittel enthalten als Komponente a) das Reaktionsprodukt aus
i) Alkoxysilangruppen haltige Monourethane i) der Formel 1

   Rₙ(OR¹)₃₋ₙSi-R²-NH-(C=O)-OR³ Formel 1

   wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
   und
ii) mindestens einem Diisocyanat ii),
in einem Mol-Verhältnis von i) zu ii) von 3:1 bis 1,5:1, bevorzugt 2,5 :1 bis 1,8:1, besonders bevorzugt 2:1;

Bevorzugt sind Rₙ, R¹, R² und R³ gleichzeitig oder unabhängig voneinander Methyl, Ethyl, n-Propyl, iso-Propyl, n-Butyl, sec-Butyl, oder tert-Butyl.
Bevorzugt ist n = 0.
R¹ und R³ sind bevorzugt gleichzeitig oder unabhängig voneinander Methyl oder Ethyl.
R² ist bevorzugt Methyl oder Propyl.
Bevorzugt sind Verbindungen mit n gleich 0, R¹ und R³ gleichzeitig oder unabhängig voneinander gleich Methyl oder Ethyl, und R² gleichzeitig oder unabhängig voneinander gleich Methyl oder Propyl.
Bevorzugt ist R³ = R¹.
Bevorzugt sind Verbindungen mit n gleich 0 und R² gleich Methyl oder Propyl, und R¹ gleich Methyl oder Ethyl und R³ = R¹.

Ganz besonders bevorzugt ist die Verbindung n gleich 0, R¹ und R³ gleich Methyl und R² gleich Propyl, N-Trimethoxysilylpropylmethylcarbamat.

Nach erfindungsgemäßer Umsetzung des Alkoxysilangruppen haltigen Monourethans i) mit dem Diisocyanat ii) beträgt der NCO-Gehalt im Endprodukt <3 Gew.-%, besonders bevorzugt <1 Gew.-%, ganz besonders bevorzugt <0,2 Gew.-%.

Die erfindungsgemäß eingesetzten Diisocyanate ii) können aus beliebigen aromatischen, aliphatischen, cycloaliphatischen und/oder (cyclo)aliphatischen Diisocyanaten bestehen.

Als aromatische Diisocyanate ii) sind prinzipiell alle bekannten aromatischen Verbindungen geeignet. Besonders geeignet sind 1,3- und 1,4-Phenylendiisocyanat, 1,5-Naphthylen-diisocyanat, 2,6-Toluylendiisocyanat (2,6-TDI), 2,4-Toluylendiisocyanat (2,4-TDI), 2,4'-Diphenylmethandiisocyanat (2,4'-MDI), 4,4'-Diphenylmethandiisocyanat (4,4'-MDI), die Mischungen aus monomeren Diphenylmethandiisocyanaten (MDI) und oligomeren Diphenylmethandiisocyanaten (Poly-MDI), Xylylendiisocyanat (MXDI) und Tetramethylxylylendiisocyanat (TMXDI).

Geeignete aliphatische Diisocyanate ii) besitzen vorteilhafterweise 3 bis 16 Kohlenstoffatome, vorzugsweise 4 bis 12 Kohlenstoffatome, im linearen und/oder verzweigten Alkylenrest.

Geeignete cycloaliphatische oder (cyclo)aliphatische Diisocyanate ii) weisen vorteilhafterweise 4 bis 18 Kohlenstoffatome, vorzugsweise 6 bis 15 Kohlenstoffatome, im Cycloalkylenrest auf. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist.

Demgegenüber versteht man unter cycloaliphatischen Diisocyanaten solche, die nur direkt am cycloaliphatischen Ring gebundene NCO-Gruppen aufweisen, z. B. H12MDI.

Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate. Ebenfalls geeignet sind 4-Methyl-cyclohexan-1,3-diisocyanat, 2-Butyl-2-ethylpentamethylendiisocyanat, 3(4)-Isocyanatomethyl-1-methylcyclohexylisocyanat, 2-Isocyanatopropylcyclohexyl-isocyanat, Diisocyanatodicyclohexylmethan (H12MDI), 1,4-Diisocyanato-4-methyl-pentan.

Bevorzugte Diisocyanate ii) sind Isophorondiisocyanat (IPDI), Hexamethylendiisocyanat (HDI), 2,2'-Dicyclohexylmethandiisocyanat (2,2'-H12MDI), 2,4'-Dicyclohexylmethandiisocyanat (2,4'-H12MDI), 4,4'-Dicyclohexylmethandiisocyanat (4,4'-H12MDI), 2-Methylpentandiisocyanat (MPDI), Pentandiisocyanat, 2,2,4-Trimethylhexamethylendiisocyanat (2,2,4-TMDI), 2,4,4-Trimethylhexamethylendiisocyanat (2,4,4-TMDI), Norbornandiisocyanat (NBDI), Methylendiphenyldiisocyanat (MDI), Toluidindiisocyanat (TDI), Tetramethylxylylendiisocyanat (TMXDI), Xylylendiisocyanat (MXDI), einzeln oder Mischungen davon.

Besonders bevorzugt werden Isophorondiisocyanat (IPDI), Hexamethylendiisocyanat (HDI), 4,4'-Diisocyanatodicyclohexylmethan, 2,4'-Diisocyanatodicyclohexylmethan, 2,2'-Diisocyanatodicyclohexylmethan allein oder in Mischungen der Isomeren (H12MDI), 2-Methylpentandiisocyanat (MPDI), 2,2,4-Trimethylhexamethylendiisocyanat, 2,4,4-Trimethylhexamethylendiisocyanat sowie deren Gemische, (TMDI), Norbornandiisocyanat (NBDI), MXDI, allein oder in Mischungen.

Ganz besonders bevorzugt werden IPDI, HDI, TMDI, MXDI und H12MDI eingesetzt, allein oder in Mischungen.

In einer besonders bevorzugten Ausführungsform ist das Diisocyanate ii) IPDI und/oder 4,4'-H12MDI und/oder HDI und/oder ein Gemisch von 2,2,4-TMDI und 2,4,4-TMDI.

Selbstverständlich können auch Gemische von Diisocyanate ii) eingesetzt werden.

Die Herstellung der Monoallophanate a) erfolgt im Allgemeinen lösungsmittelfrei oder unter Verwendung von nicht-protischen Lösemitteln, wobei die Umsetzung diskontinuierlich oder kontinuierlich erfolgen kann. Die Reaktion wird durchgeführt in geeigneten Aggregaten, z.B. Rührkessel, Extruder, Statikmischern, Knetkammern. Die Reaktion kann bei Raumtemperatur, das heißt bei Temperaturen im Bereich von 15 bis 40 °C, insbesondere im Bereich von 15 bis 25 °C, durchgeführt werden. Bevorzugt werden jedoch höhere Temperaturen im Bereich 80 bis 220 °C, insbesondere im Bereich von 80 bis 120 °C verwendet. Die Reaktion wird unter Ausschluss von Wasser durchgeführt. Bevorzugt wird die Reaktion lösemittelfrei durchgeführt.

Zur Beschleunigung der Reaktion können vorteilhaft in der Urethanchemie bekannte Katalysatoren C), z.B. Metallorganische Verbindungen, wie Zinn oder Zink haltige Verbindungen, Salze, wie z.B. Zn(II)chlorid und/oder Basen verwendet werden. Geeignet sind zum Beispiel Sn-, Bi-, Zn- und andere Metallcarboxylate wie zB. Dibutylzinndilaurat, Zinnoctoat, Zinkethylhexanoat, Bismuthneodecanoat, tert.-Amine wie beispielsweise 1,4-Diazabicyclo[2.2.2]octan (DABCO), 1,8-Diazabicyclo[5.4.0]undec-7-en (DBU), 1,5-Diazabicyclo[4.3.0]non-5-en (DBN), Triethylamin, Amidine und Guanidine, sowie quarternäre Ammoniumsalze, bevorzugt Tetralkylammoniumsalze und/oder quarternäre Phosphoniumsalze.

Das erfindungsgemäße Beschichtungsmittel enthält als Komponente b) wenigstens eine Bindemittelkomponente. Grundsätzlich eignet sich als Bindemittel alle dem Fachmann bekannten Arten von Bindemitteln, beispielsweise auch thermoplastische, das heißt nicht vernetzbare Bindemittel, die üblicherweise ein mittleres Molekulargewicht > 10000 g/mol aufweisen. Bevorzugt werden jedoch Bindemittel, die über reaktive funktionelle Gruppen mit aciden Wasserstoffatomen z. B. Hydroxyl- oder primäre oder sekundäre Amingruppen verfügen. Geeignete Bindemittel der genannten Art weisen beispielsweise mindestens eine, bevorzugt jedoch zwei oder mehr Hydroxylgruppen auf. Weitere geeignete funktionelle Gruppen des Bindemittels sind beispielsweise Alkoxysilan-Funktionalitäten.

Als Bindemittelkomponente b) mit funktionellen Gruppen werden bevorzugt hydroxylgruppenhaltige Polyester, Polyether, Polyacrylate, Polycarbonate und Polyurethane mit einer OH-Zahl von 20 bis 500 mg KOH/g und einer mittleren Molmasse von 250 bis 6000 g/Mol eingesetzt. Besonders bevorzugt werden im Rahmen der vorliegenden Erfindung Hydroxylgruppen-haltige Polyester oder Polyacrylate mit einer OH-Zahl von 50 bis 250 mg KOH/g und einem mittleren Molekulargewicht von 500 bis 6000 g/mol als Bindemittelkomponenten eingesetzt. Die Hydroxylzahl (OH-Zahl, OHZ) wird bestimmt nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt. Das Molekulargewicht wird bestimmt mittels Gelpermeationschromatographie (GPC). Die Charakterisierung der Proben erfolgt in Tetrahydrofuran als Eluent nach DIN 55672-1.

Als Bindemittelkomponente b) eingesetztes hydroxylgruppenhaltiges (Meth)acryl-Copolymerisat können Harze mit einer Monomerzusammensetzung, wie sie z. B. in WO 93/15849 (S. 8, Zeile 25 bis S. 10, Zeile 5, beschrieben sind, verwendet werden. Dabei sollte die durch anteilige Verwendung von (Meth)acrylsäure als Monomer einzustellende Säurezahl des (Meth)acryl-Copolymerisates 0 bis 30, vorzugsweise 0 bis 15 mg KOH/g betragen. Das zahlenmittlere Molgewicht (ermittelt durch Gelpermeationschromatographie gegen einen Polystyrolstandard) des (Meth)acryl-Copolymerisates beträgt vorzugsweise 2000 bis 20000 g/mol, die Glasübergangstemperatur beträgt vorzugsweise - 40°C bis + 60 °C. Der durch anteilige Verwendung von Hydroxyalkyl(meth)acrylaten einzustellende Hydroxylgehalt der erfindungsgemäß zu verwendenden (Meth)acryl-Copolymerisate beträgt vorzugsweise 20 bis 500 mg KOH/g, besonders bevorzugt 50 bis 250 mg KOH/g.

Erfindungsgemäß als Bindemittelkomponente b) geeignete Polyesterpolyole sind Harze mit einer Monomerzusammensetzung aus Di- und Polycarbonsäuren und Di- und Polyolen, wie sie in der WO 93/15849 beschrieben sind. Als Polyesterpolyole können auch Polyadditionsprodukte von Caprolacton an niedermolekulare Di- und Triole, wie sie z. B. unter der Bezeichnung CAPA® (Perstorp) erhältlich sind, eingesetzt werden. Das rechnerisch bestimmte zahlenmittlere Molgewicht beträgt vorzugsweise 500 bis 5000 g/mol, besonders bevorzugt 800 bis 3000 g/mol, die mittlere Funktionalität beträgt vorzugsweise 2,0 bis 4,0, bevorzugt 2,0 bis 3,5.

Als erfindungsgemäß als Bindemittelkomponente b) zu verwendende urethan- und estergruppenhaltige Polyole kommen prinzipiell auch solche zum Einsatz, wie sie in EP 140 186 beschrieben sind. Bevorzugt sind urethan- und estergruppenhaltige Polyole, zu deren Herstellung HDI, IPDI, Trimethylhexamethylendiisocyanat (TMDI) oder Dicyclohexylmethandiisocyanat (H12-MDI) verwendet werden, eingesetzt. Das zahlenmittlere Molgewicht beträgt vorzugsweise 500-5000 g/mol, die mittlere Funktionalität liegt insbesondere im Bereich von 2,0 - 3,5.

Auch Trialkoxysilan-funktionelle Bindemittel eignen sich zur Verwendung als Komponente b). Derartige Harze können durch Copolymerisation von Acrylat- oder Methacrylat-Monomeren mit acryl- oder methacryl-funktionellen Alkyl-Trialkoxysilan-Derivaten (z. B. Dynasylan MEMO der Evonik Industries AG) gewonnen werden, wie zum Beispiel in der WO 92/11328 beschrieben. Ein alternativer Syntheseweg besteht in der Derivatisierung von hydroxylgruppenhaltigen Polyethern, Polyestern, Polycarbonatdiolen oder Polyacrylaten mit Isocyanatopropyltrialkoxysilan, wie sie beispielsweise in WO2008/131715 in den Beispielen 3 und 4 beschrieben ist. Auch aminohaltige Bindemittel kommen in Frage, z.B., Aminopropyltrimethoxysilan (z.B. Dynasylan AMMO der Evonik Industries AG), Aminopropyltriethoxysilan, Aminomethyltrimethoxysilan oder Aminomethyltriethyoxysilan.

Selbstverständlich können auch Mischungen der vorab beschriebenen Bindemittelkomponenten b) eingesetzt werden.

Besonders bevorzugte Bindemittelkomponenten b) sind hydroxylgruppenhaltige Polyester und Polyacrylate, allein oder in Mischungen.

Der Anteil der Bindemittelkomponente b) in dem erfindungsgemäßen Bindemittel beträgt bevorzugt 1 bis 90 Gewichtsprozent, bezogen auf die Summe der Komponenten a), b) und gegebenenfalls c) und d), bevorzugt 20 bis 60 Gewichtsprozent.

### Komponente c)

Die erfindungsgemäß eingesetzten Polyisocyanate c) können aus beliebigen aromatischen, aliphatischen, cycloaliphatischen und/oder (cyclo)aliphatischen Polyisocyanaten bestehen.

Als aromatische Polyisocyanate c) sind prinzipiell alle bekannten aromatischen Verbindungen geeignet. Besonders geeignet sind 1,3- und 1,4-Phenylendiisocyanat, 1,5-Naphthylen-diisocyanat, 2,6-Toluylendiisocyanat (2,6-TDI), 2,4-Toluylendiisocyanat (2,4-TDI), 2,4'-Diphenylmethandiisocyanat (2,4'-MDI), 4,4'-Diphenylmethandiisocyanat (4,4'-MDI), die Mischungen aus monomeren Diphenylmethandiisocyanaten (MDI) und oligomeren Diphenylmethandiisocyanaten (Poly-MDI), Xylylendiisocyanat (MXDI) und Tetramethylxylylendiisocyanat (TMXDI).

Das als Vernetzerkomponente c) verwendete aliphatische oder cycloaliphatische Polyisocyanat c) umfasst mindestens ein aliphatisches und/oder cycloaliphatisches Polyisocyanat mit einer NCO-Funktionalität von wenigstens 2, bevorzugt 2 bis 6, bevorzugter von 2,8 bis 6, am bevorzugtesten 2 bis 4. Unter dem Begriff "NCO-Funktionalität", wie hierin verwendet, wird die Zahl der reaktiven NCO-Substituenten verstanden, die das entsprechende Molekül, bevorzugt die Vernetzerkomponente c), durchschnittlich aufweist.

Das erfindungsgemäß als erfindungsgemäße Komponente c) eingesetzte Polyisocyanat c) kann ein beliebiges aliphatisches, cycloaliphatisches und/oder (cyclo)aliphatisches Diisocyanat sein. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H12MDI.

Zur Verwendung als erfindungsgemäße Komponente c) geeignete aliphatische Polyisocyanate umfassen einen linearen oder verzweigten Alkylenrest mit bevorzugt 3 bis 16 Kohlenstoffatome, bevorzugter 4 bis 12 Kohlenstoffatome. Geeignete cycloaliphatische oder (cyclo)aliphatische Polyisocyanate c) umfassen einen Cycloalkylenrest mit bevorzugt 4 bis 18 Kohlenstoffatomen, bevorzugter 6 bis 15 Kohlenstoffatomen, auf. Beispiele geeigneter Di- oder Polyisocyanate umfassen Cyclohexandiisocyanat, Methylcyclohexandiisocyanat, Ethylcyclo-hexandiisocyanat, Propylcyclohexandiisocyanat, Methyldiethylcyclohexan-diisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexyl-isocyanat, 2,4'-Methylenbis(cyclohexyl)diisocyanat und/oder 1,4-Diisocyanato-4-methyl-pentan.

Bevorzugt ist das als erfindungsgemäße Komponente c) eingesetzte Polyisocyanat ausgewählt aus Isophorondiisocyanat (IPDI), Hexamethylendiisocyanat (HDI), 2,2' Di-cyclohexylmethandiisocyanat (2,2'-H12MDI), 2,4' Dicyclohexylmethandiisocyanat (2,4'-H12MDI), 4,4' Dicyclohexylmethandiisocyanat (4,4'-H12MDI), 2 Methyl¬pentan¬diisocyanat (MPDI), Pentandiisocyanat, 2,2,4 Trimethylhexamethylendiisocyanat (2,2,4-TMDI), 2,4,4 Trimethylhexamethylendiisocyanat (2,4,4 TMDI), Norbornandiisocyanat (NBDI), Methylendiphenyldiisocyanat (MDI), Toluidindiisocyanat (TDI), Tetramethylxylylendiisocyanat (TMXDI), Xylylendiisocyanat (MXDI), einzeln oder Mischungen davon, eingesetzt werden.

Besonders bevorzugt ist das als erfindungsgemäße Komponente c) eingesetzte Polyisocyanat ausgewählt aus der Gruppe, die Isophorondiisocyanat (IPDI), Hexamethylendiisocyanat (HDI), Diisocyanato-dicyclohexylmethan (H12MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) umfasst. Besonders bevorzugt sind IPDI, HDI, TMDI und/oder H12MDI, wobei IPDI, H12MDI und/oder HDI die bevorzugtesten Polyisocyanate darstellen.

Es werden auch bevorzugt als erfindungsgemäße Komponente c) Polyisocyanate eingesetzt, die sich aus den genannten Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Solche Polyisocyanate sind im Handel erhältlich.
Besonders bevorzugt sind als erfindungsgemäße Komponente c) Isocyanurate, insbesondere Isocyanurate aus IPDI und/oder HDI, z.B. VESTANAT HT 2500 L und VESTANAT T 1890. Derartige Polyisocyanate können gegebenenfalls mit Di- oder polyfunktionellen, H-aciden Komponenten, wie z. B. Di- oder Polyolen und/oder Di- oder Polyaminen, zusätzlich kettenverlängert oder verzweigt sein.

Als erfindungsgemäße Komponenten c) werden besonders bevorzugt Isocyanurate eingesetzte, die durch destillative Abtrennung von Restmonomeren befreit, so dass der Gehalt an Polyisocyanat-Restmonomer <0.5 Gew.-% beträgt.

Im Rahmen der vorliegenden Erfindung können beliebige Gemische der vorab beschriebenen Di- und/oder Polyisocyanate eingesetzt werden.

Die Komponente c), falls enthalten, ist in dem erfindungsgemäßen Beschichtungsmittel zu 5 bis 50 Gewichtsprozent, bevorzugt 15 bis 40 Gewichtsprozent, bezogen auf die Summe der Komponenten a), b), ggf. c) und d), enthalten.

Als Katalysator d) ist in einer bevorzugten Ausführungsform in einer Menge von 0,1 bis zu 5 Gewichtsprozent, vorzugsweise 0,2 bis 3 Gewichtsprozent, bezogen auf die Summe der Komponenten a), b), ggf. c) und d), in dem erfindungsgemäßen Beschichtungsmittel enthalten.

Als Katalysatoren d) können organische Carbonsäuren verwendet werden. Beispiele geeigneter Carbonsäuren sind insbesondere Salicylsäure, Benzoesäure, Zitronensäure, Phthalsäure, Terephthalsäure, Isophthalsäure, Dodecansäure, 1.12-Dodecandisäure und/oder Ascorbinsäure. Bevorzugt werden Salicylsäure, Zitronensäure oder Benzoesäure verwendet, wobei auch Mischungen der genannten Carbonsäuren eingesetzt werden können.

Als Katalysator d) werden auch quarternäre Ammoniumsalze allein oder in Mischungen, bevorzugt Tetralkylammoniumsalze und/oder quarternäre Phosphoniumsalze mit Halogenen, Hydroxiden, Alkoholaten oder organischen oder anorganischen Säureanionen als Gegenion, eingesetzt. Beispiele dafür sind:
Tetramethylammoniumformiat, Tetramethylammoniumacetat, Tetramethylammoniumpropionat, Tetramethylammoniumbutyrat, Tetramethylammonium-benzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri methylphenylammoniumethanolat, Triethylmethylammoniumethanolat, Tri methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Trimethylphenylammoniumbenzylat, Triethylmethylammoniumbenzylat, Trimethylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid. Diese Katalysatoren können allein oder in Mischungen zugesetzt werden. Bevorzugt werden Tetraethylammoniumbenzoat und Tetrabutylammoniumhydroxid verwendet.

Als Katalysator d) können auch Metallkomplexe mit Chelatliganden verwendet werden. Bei den Chelatliganden handelt es sich um organische Verbindungen mit wenigstens zwei funktionellen Gruppen, die an Metallatome oder -ionen koordinieren können. Es können beispielsweise die Aluminium- und Zirkon-Chelatkomplexe, wie sie beispielsweise in US-P 4,772,672 A, beschrieben sind, als Katalysator verwendet werden. Bevorzugte Metallchelate sind Chelat auf Basis von Zink, Lithium, Zinn, Aluminium, Zirkon, Titan und/oder Bor, wie beispielsweise Aluminiumethylacetoacetat, Zirkonethylacetoacetat, Zinkacetylacetonat, Lithiumacetylacetonat und Zinnacetylacetonat, allein oder in Mischungen. Bevorzugt wird Zinkacetylacetonat eingesetzt.

Als Katalysatoren d) kommen außerdem quarternäre Ammoniumacetylacetonate oder quarternäre Phosphoniumacetylacetonate in Frage.
Beispiele für solche Katalysatoren sind Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Als Katalysator d) sind ferner Aluminium-, Zirkon-, Titan- und/oder Bor-Alkoholate und/oder Aluminium-, Zirkon-, Titan- und/oder Bor-Ester geeignet.

Auch geeignet als Katalysatoren sind basische Stoffe wie z.B. Guanidine und Amidine und tertiäre Amine. Beispiele dafür sind Tetramethylguanidin, Diazabicyloundecen (DBU), Diazabicyclononen (DBN), und Diazabicyclooctan (DABCO).

Als Katalysator d) können zur Katalyse der Urethanreaktion auch Katalysatoren verwendet werden, die sich auf dem Gebiet der PUR-Technologie bewährt haben, z. B. organische Sn(IV)- Sn(II), Zn, Bi-Verbindungen, oder metallorganischen Katalysatoren, wie z. B. Dibutylzinndilaurat, Zinnoctoat, Zinkethylhexanoat, Bismuthneodecanoat, oder tertiäre Amine, wie z. B. 1,4-Diazabicylco[2.2.2.]octan. Derartige Katalysatoren für Urethanreaktionen werden erfindungsgemäß jedoch nur in Abmischungen mit anderen erfindungsgemäßen Katalysatoren verwendet. Bevorzugt wird Zinkethylhexanoat eingesetzt.

Als Katalysator d) kann auch ein phosphorhaltiger, bevorzugt phosphor- und stickstoff-haltiger Katalysator eingesetzt werden. Dabei können auch Mischungen aus zwei oder mehreren verschiedenen Katalysatoren eingesetzt werden. Beispiele für geeignete phosphorhaltige Katalysatoren sind substituierte Phosphonsäurediester und Diphosphonsäurediester, vorzugsweise aus der Gruppe bestehend aus acyclischen Phosphonsäurediestern, cyclischen Phosphonsäurediestern, acyclischen Diiphosphonsäurediestern und cyclischen Diphosphonsäurediestern. Derartige Katalysatoren sind beispielsweise in der DE-A 102005045228 beschrieben.

Als Katalysator d) kann bevorzugt auch ein aminblockierter Phosphorsäureester und besonders bevorzugt aminblockierter Phosphorsäureethylhexylester und aminblockierter Phosphorsäurephenylester eingesetzt werden. Als Beispiele für Amine, mit welchem die Phosphorsäureester blockiert werden, sind insbesondere tertiäre Amine, beispielsweise Triethylamin, zu nennen. Besonders bevorzugt werden zur Blockierung der Phosphorsäureester tertiäre Amine eingesetzt, die eine gute Wirksamkeit des Katalysators bei Härtungstemperaturen von 100 bis 160 °C aufweisen. Bestimmte mit Amin blockierte Phosphorsäurekatalysatoren sind auch kommerziell erhältlich (z. B. Nacure-Typen der Fa. King Industries). Beispielsweise sei der unter der Bezeichnung Nacure 4167 von der Firma King Industries als besonders geeigneter Katalysator auf der Basis eines Amin - blockierten Phosphorsäureteilesters genannt.

Als Katalysator d) können auch organische Sulfonsäuren in unblockierter oder blockierter Form verwendet werden. Als Sulfonsäure ist grundsätzlich jede organische Sulfonsäure geeignet, bevorzugt sind p-Toluolsulfonsäure und Dodecylbenzolsulfonsäure. Für thermisch, d. h. oberhalb von 100 °C vernetzende Beschichtungssysteme können diese Sulfonsäuren erfindungsgemäß auch in amin-neutralisierter Form bevorzugt eingesetzt werden. Erfindungsgemäß können auch latente, nicht-ionogene Sulfonsäurederivate, die erst oberhalb von 100 °C Sulfonsäuren freisetzen, wie z. B. Addukte von Sulfonsäuren an epoxidhaltige Komponenten, wie es in DE-OS 23 56768 beschrieben wird, eingesetzt werden. Auch Salze der Trifluormethansulfonsäure (Triflate) sind geeignete Sulfonsäure-basierte Katalysatoren.

Bevorzugt werden Katalysatoren d) ausgewählt aus Tetraethylammoniumbenzoat, Tetrabutylammoniumhydroxid, Tetraethylammoniumacetylacetonat, Tetrabutylammoniumacetylacetonat, Dibutylzinndilaurat, Zinkacetylacetonat, Zinkethylhexanoat eingesetzt.

Der Katalysator d) in den erfindungsgemäßen Beschichtungsmitteln kann allein aus den oben genannten Alternativen bestehen, es können aber auch beliebige Mischungen der Katalysatoren eingesetzt werden.

Das erfindungsgemäße Beschichtungsmittel kann zusätzlich in der Lacktechnologie bekannte Hilfsstoffe und/oder Zusatzstoffe e) wie Stabilisatoren, Lichtschutzmittel, Katalysatoren, zusätzliche Vernetzer, Füllstoffe, Pigmente, Verlaufsmittel oder Rheologiehilfsmittel, wie z. B. sog. "sag control agents", Mikrogele oder pyrogenes Siliciumdioxid oder auch Nanopartikel, wie z. B. in EP 1204701 B1 beschrieben, in typischen Konzentrationen enthalten. Zusätzlich kann die Komponente e) zusätzliche Vernetzer wie in der Lackchemie bekannt, z. B. in Form von Melamin-, Benzoguanamin-Harzen, carbamatfunkionelle Komponenten oder blockierte Polyisocyanate eingesetzt werden. Falls erforderlich, können in der Komponente e) der erfindungsgemäßen Beschichtungsmittel auch in der Lacktechnologie übliche anorganische oder organische Farb- und/oder Effektpigmente eingearbeitet werden.

In einer bevorzugten Ausführungsform ist das erfindungsgemäße Beschichtungsmittel ein pigmentfreies System, also ein Klarlacksystem. Die Komponente e) kann in diesem Fall vorzugsweise in einer Menge von 0,5 bis zu 8 Gewichtsprozent, noch bevorzugter 1 bis 6 Gewichtsprozent, bezogen auf die Summe der Komponenten a), b), ggf. c) und d), in dem erfindungsgemäßen Beschichtungsmittel enthalten sein.

In einer weiteren bevorzugten Ausführungsform ist das erfindungsgemäße Beschichtungsmittel ein farbiges Beschichtungssystem. Pigmente und Füllstoffe als Komponente e) können in diesem Fall in einer Menge von 10 bis 200 Gewichtsprozent bezogen auf die Summe der Komponenten a), b), ggf. c) und d), in dem erfindungsgemäßen Beschichtungsmittel enthalten sein.

Weiterhin kann das erfindungsgemäße Beschichtungsmittel organische Lösemittel als Komponente f) enthalten. Geeignete Lösemittel sind z. B. Ketone, Alkohole, Ester oder Aromaten.

Die Komponente f) ist bevorzugt in Mengen von 20 bis zu 150 Gewichtsprozent, noch bevorzugter 30 bis 60 Gewichtsprozent, bezogen auf die Summe der Komponenten a), b), ggf. c) und d), in dem erfindungsgemäßen Beschichtungsmittel enthalten.

Die Herstellung der erfindungsgemäßen Beschichtungsmittel erfolgt durch Mischung der vorab beschriebenen Komponenten. Das Mischen kann durch dem Fachmann bekannte Mischer erfolgen, beispielsweise diskontinuierlich in Rührbehältern, Dissolvern, Perlmühlen, Walzenstühlen, etc. oder auch kontinuierlich unter Verwendung von z. B. Statikmischern erfolgen.

Gegenstand der Erfindung ist auch die Verwendung der Alkoxysilan-funktionalisierten Allophanat-haltigen Beschichtungsmittel in Lackzusammensetzungen und Klebstoffzusammensetzungen und Metallbeschichtungszusammensetzungen.

Gegenstand der Erfindung ist auch die Verwendung der Alkoxysilan-funktionalisierten Allophanat-haltigen Beschichtungsmittel in Beschichtungszusammensetzungen und Lackzusammensetzungen für Metall-, Glas-, Kunststoff-, Holz-, MDF- (Middle Density Fiber Boards) oder Ledersubstrate oder sonstigen hitzeresistenten Untergründen.

Gegenstand der Erfindung ist auch die Verwendung der erfindungsgemäßen Alkoxysilan-funktionalisierten Allophanat-haltigen Beschichtungsmittel in Klebstoffzusammensetzungen für Verklebungen von Metall-, Kunststoff-, Glas-, Holz-, MDF- oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, MDF-Beschichtungen, Glasbeschichtungszusammensetzungen, Lederbeschichtungszusammensetzungen und Kunststoffbeschichtungszusammensetzungen.

Die vorliegende Erfindung wird weiterhin durch die folgenden nicht beschränkenden Beispiele veranschaulicht, denen weitere Merkmale, Ausführungsformen, Aspekte und Vorteile der vorliegenden Erfindung entnommen werden können.

### Beispiele:

### Einsatzstoffe:

**Vestanat**® **EP-UPMS:** Trimethoxysilylpropylmethylcarbamat (Evonik Resource Efficiency GmbH),
**Vestanat**® **IPDI:** Isophorondiisocyanat (Evonik Resource Efficiency GmbH)
**Vestanat**® **TMDI:** Mischung aus 2,2,4-Trimethylhexamethylendiisocyanat (2,2,4-TMDI) und 2,4,4-Trimethylhexamethylendiisocyanat (Evonik Resource Efficiency GmbH))
**Vestanat**® **HT 2500/100:** Hexamethylen-1,6-diisocyanat, homopolymer (Isocyanurat-Typ) (Evonik Resource Efficiency GmbH))
**Vestanat**® **EP Cat 11 B:** Tetraethylammoniumbenzoat in Butanol (Evonik Resource Efficiency GmbH)
**Tegoglide**® **410:** Gleit und Antiblocking Aditiv auf Basis eines Polyethersiloxan Copolymers (Evonik Resource Efficiency GmbH)
**Vestanat**® **EP-M60:** linearer kurzkettiger Silanfunktionalisierter Vernetzer (Evonik Resource Efficiency GmbH)
**Vestanat**® **EP-M95:** verzweigter kurzkettiger Silanfunktionalisierter Vernetzer, (Evonik Resource Efficiency GmbH)
**Vestanat**® **EP-M120:** linearer langkettiger Silanfunktionalisierter Vernetzer, (Evonik Resource Efficiency GmbH)
**Setalux**® **1760 VB-64:** Polyacrylatpolyol, Nuplex Resins B.V.
**Tinuvin**® **292:** sterisch gehindertes Amin, Lichtschutzmittel; BASF SE
**Tinuvin**® **900:** UV-Absorber; BASF SE

### Herstellung

### Beispiel 1

### Alkoxysilan-funktionalisierte Allophanat-haltiges Bindemittel, Komponente 1a)

Es wurden 340,2 g Vestanat® EP-UPMS, 0,3 g Zink(II)ethylhexanoat und 159,7 g Vestanat® IPDI in einem Dreihalskolben mit Rückflusskühler vorgelegt, mit Stickstoff abgedeckt und unter Rühren auf 100 °C erhitzt. Nach 20-stündigem Erhitzen wurde ein NCO-Gehalt von 1,4 Gew.-% NCO erhalten. Dann wurden 10,84 g Butanol hinzugefügt und 1h bei 100 °C erhitzt bis ein NCO-Gehalt von < 0,1 Gew.-% NCO erreicht wurde. Nach Abkühlen auf Raumtemperatur erhält man das Alkoxysilan-funktionalisierte Allophanat-haltige Bindemittel. Komponente 1a als klare Flüssigkeit mit einer Viskosität von 14,3 Pas (bei 23°C).

### Beispiel 2

### Alkoxysilan-funktionalisierte Allophanat-haltiges Bindemittel, Komponente 2a)

Es wurden 474,6 g Vestanat® EP-UPMS, 0,22 g Zink(II)ethylhexanoat und 211,8 g Vestanat® TMDI in einem Dreihalskolben mit Rückflusskühler vorgelegt, mit Stickstoff abgedeckt und unter Rühren auf 100 °C erhitzt. Nach 24-stündigem Erhitzen wurde ein NCO-Gehalt von 0,8 Gew.-% NCO erhalten. Dann wurden 10,35 g Butanol hinzugefügt und 3h bei 65 °C erhitzt bis ein NCO-Gehalt von < 0,1 Gew.-% NCO erreicht wurde. Nach Abkühlen auf Raumtemperatur erhält man das Alkoxysilan-funktionalisierte Allophanat-haltige Bindemittel. Kompontente 2a als klare Flüssigkeit mit einer Viskosität von 1170 mPas (bei 23°C).

### Vergleichsbeispiel 3

### Alkoxysilan-funktionalisierte Allophanat-haltiges Bindemittel. Komponente 3a (Vergleichsbeispiel

Es wurden 44,3 g Vestanat® EP-UPMS, 0,01 g Zink(II)ethylhexanoat und 35,7 g Vestanat® HT 2500/100 in einem Dreihalskolben mit Rückflusskühler vorgelegt, mit Stickstoff abgedeckt und unter Rühren auf 100 °C erhitzt bis der NCO-Gehalt von <0,1 Gew.-% erreicht wurde. Dann wurde noch in der Hitze zwecks Viskositätserniedrigung 20 g Butylacetat hinzugefügt. Das so erhaltene Alkoxysilan-funktionalisierte Allophanat-haltiges Bindemittel. Komponente 3a ist eine klare Flüssigkeit mit einer Viskosität von 750 mPas (bei 23°C).

**Tabelle I: Zusammensetzung der erfindungsgemäßen Klarlacke und Vergleichsbeispiele (Mengen in Gramm)**

| Position | | I Gemäß Erfindung | II Gemäß Erfindung | III Vergleich | IV Vergleich | V Vergleich | VI Vergleich |
|---|---|---|---|---|---|---|---|
| 1 | Alkoxysilan-funktionalisierte Allophanat-haltige Bindemittel Komponente 1a) | 26,36 | | | | | |
| 2 | Alkoxysilan-funktionalisierte Allophanat-haltige Bindemittel Komponente 2a) | | 27,79 | | | | |
| 3 | Alkoxysilan-funktionalisierte Allophanat-haltige Bindemittel Komponente 3a) (Vergleich) | | | 29,81 | | | |
| 4 | Vergleichsbeispiel: Vestanat® EP-M95 | | | | 26,79 | | |
| 5 | Vergleichsbeispiel: Vestanat® EP-M60 | | | | | 26 | |
| 6 | Vergleichsbeispiel: Vestanat® EP-M120 | | | | | | 53,2 |
| 7 | Setalux® 1760 VB-64 (64 %ig), Komponente b) | 41,18 | 43,41 | 36,79 | 41,85 | 40,6 | 41,6 |
| 8 | Vestanat® EP-CAT 11 B Komponente d) | 1,05 | 1,11 | 0,95 | 1,06 | 1,0 | 1,1 |
| 9 | TegoGlide® 410 (10%ig in Butylacetat) | 0,50 | 0,49 | 0,49 | 0,48 | 0,49 | 0,5 |
| 10 | Tinuvin® 292 | 0,27 | 0,28 | 0,23 | 0,27 | 0,26 | 0,27 |
| 11 | Tinuvin® 900 (8%ig in Xylol) | 3,30 | 3,47 | 2,94 | 3,34 | 3,25 | 3,33 |
| 12 | Butylacetat/Xylol (1:1) | 27,34 | 23,45 | 27,20 | 26,21 | 28,4 | 0 |

### Klarlacke

Für die Formulierung der erfindungsgemäßen Klarlacke und der Vergleichsbeispiele wurden die Komponenten der in Tabelle 1 dargestellten Zusammensetzungen unmittelbar vor der Verarbeitung miteinander gemischt.

Die Viskosität der Formulierungen betrug, bestimmt als Auslaufzeit im DIN-4-Becher bei 23 °C, ca. 20 Sekunden.

In Tabelle 2 sind die Topfzeiten der Zusammensetzungen I-VI dargestellt. Die Topfzeiten wurden wie folgt ermittelt:
Die zu bestimmende flüssige Probe (mind. 70ml) wird in ein 100ml Glasfläschchen gefüllt und mit einem Metallstift in senkrechter Ausrichtung versehen, an dessen Ende, welches in die Probe eintaucht, ein rundes Metallplättchen mit dem Durchmesser von ca. 2cm hängt. Das Glasfläschchen wird mit einem Lochdeckel versehen und der Metallstift in das Gelierzeitgerät (Techne Gelation Timer) eingespannt. Die Probe befindet sich jetzt in einem auf Zimmertemperatur (23°C) eingestelltem Wasserbecken (Lauda Thermostat Typ BK2). Der Metallstift in der Probe bewegt sich oszillierend in einem gleichbleibendem Rhythmus auf und ab, bis der Widerstand der Probe größer ist, als die Kraft des Gelierzeitgeräts. In diesem Fall bleibt der Metallstift stecken, die Probe ist "geliert". Die Zeitdauer zwischen Start der oszillierenden Bewegung des Metallstifts und Beendigung dieser, wird am Display des Geliergeräts angegeben.

**Tabelle 2: Topfzeiten der Zusammensetzungen I-VI**

| **Klarlacksystem** | **Topfzeit (h)** |
|---|---|
| I | 18,8 |
| II | 14,0 |
| III (Vergleich) | 5,8 |
| IV (Vergleichsbeispiel) | 4,3 |
| V (Vergleichsbeispiel) | 4,0 |
| VI (Vergleichsbeispiel) | 2,0 |

Aus den in Tabelle 2 dargestellten Topfzeiten geht klar hervor, dass die erfindungsgemäßen Alkoxysilan-funktionalisierte Allophanat-haltige Bindemittel I-II eine deutlich längere Topfzeit haben als die Vergleichsbeispiele III - VI. Aus dem Stand der Technik (Vergleichsbeispiele IV - VI) war nicht zu erwarten, dass die Topfzeit bei Einsatz der erfindungsgemäßen Alkoxysilan-funktionalisierte Allophanat-haltige Bindemittel I-II sich um ein vielfaches verlängert.

Zur Ermittlung der mechanischen Kenndaten wurden alle Lacke mit einer 120 µm Rakel auf phosphatierte Stahlbleche (Chemetall Gardobond 26S/60/OC) appliziert und 22 min bei 160 °C gehärtet.

**Tabelle 3: Lackeigenschaften der Zusammensetzungen I - III nach Härtung bei 160 °C (22 min)**

| Zusammensetzung | I | II | III (Vergleich) |
|---|---|---|---|
| Gitterschnitt | 0 | 0 | 2 |
| Pendelhärte (König) [s] n 1 d | 188 | 165 | 184 |
| MEK-Test [ASTM D 4752] (Doppelhübe, 1kg Auflagegewicht) | >150 | >150 | >150 |

Die Lackeigenschaften der Beschichtungen I und II, die die erfindungsgemäßen Alkoxysilan-funktionalisierte Allophanat-haltige Bindemittelkomponenten 1 und 2 enthalten, zeigen bei etwa gleicher Pendelhärte und MEK-Beständigkeit eine verbesserte Haftung (Gitterschnitt) als das Vergleichsbeispiel III. Insbesondere bei der Rezeptur III, welche das dreifach funktionalisierten Vergleichsbeispiel 3 enthält, hätte man aufgrund des höheren Vernetzungsgrades eine höhere Härte erwartet als bei den Beschichtungen I und II, die die erfindungsgemäßen Alkoxysilan-funktionalisierten Allophanat-haltigen Bindemittelkomponenten 1 und 2 enthalten.

## Patentansprüche

1. Alkoxysilan-funktionalisierte Allophanat-haltige Beschichtungsmittel enthaltend
a) 10-99 Gew.-% wenigstens einer Bindemittelkomponente aus dem Reaktionsproduckt von
i) Alkoxysilangruppen haltigen Monourethanen i) der Formel 1
Rₙ(OR¹)₃₋ₙSi-R²-NH-(C=O)-OR³ Formel 1
wobei Rₙ, R¹, R² und R³ unabhängig voneinander Kohlenwasserstoffreste mit 1-8 C-Atomen bedeuten, wobei diese linear, verzweigt oder cyclisch sein können, oder auch cyclisch ineinander übergehen können, und n gleich 0-2 bedeutet,
und
ii) mindestens einem Diisocyanat ii),
in einem Mol-Verhältnis von i) zu ii) von 3:1 bis 1,5:1, bevorzugt 2,5 :1 bis 1,8:1, besonders bevorzugt 2:1;
b) 1-90 Gew.-% wenigstens eine Bindemittelkomponente, bevorzugt ein hydroxylgruppenhaltiges oder amingruppenhaltiges Bindemittel,
c) 0-50 Gew.-% wenigstens ein aromatisches, aliphatisches oder cycloaliphatisches Polyisocyanat, das eine NCO-Funktionalität von wenigstens 2, bevorzugt 2,8 bis 6 aufweist,
d) 0-5 Gew.-% wenigstens einen Katalysator,
wobei sich die Komponenten a)-d) zu 100 Gew.-% addieren,
e) optional Hilfsstoffstoffe und/oder Zusatzstoff,
f) optional Lösungsmittel.

2. Beschichtungsmittel nach Anspruch 1, wobei Rₙ, R¹, R² und R³ gleichzeitig oder unabhängig voneinander Methyl, Ethyl, n-Propyl, iso-Propyl, n-Butyl, sec-Butyl, oder tert-Butyl, bedeuten.

3. Beschichtungsmittel nach mindestens einem der vorherigen Ansprüche, wobei n gleich 0, R¹ und R³ gleichzeitig oder unabhängig voneinander gleich Methyl oder Ethyl, und R² gleichzeitig oder unabhängig voneinander gleich Methyl oder Propyl, bedeuten.

4. Beschichtungsmittel nach mindestens einem der vorherigen Ansprüche, wobei n gleich 0 und R² gleich Methyl oder Propyl, und R¹ gleich Methyl oder Ethyl und R³ = R¹ bedeuten.

5. Beschichtungsmittel nach mindestens einem der vorherigen Ansprüche, wobei n gleich 0, R^{1 -} und R³ gleich Methyl und R² gleich Propyl bedeuten.

6. Beschichtungsmittel nach mindestens einem der vorherigen Ansprüche, wobei Diisocyanate a ii) ausgewählt aus Isophorondiisocyanat (IPDI), Hexamethylendiisocyanat (HDI), 2,2' Di-cyclohexylmethandiisocyanat (2,2'-H12MDI), 2,4' Dicyclohexylmethandiisocyanat (2,4'-H12MDI), 4,4' Dicyclohexylmethandiisocyanat (4,4'-H12MDI), 2 Methyl¬pentan¬diisocyanat (MPDI), Pentandiisocyanat, 2,2,4 Trimethylhexamethylendiisocyanat (2,2,4-TMDI), 2,4,4 Trimethylhexamethylendiisocyanat (2,4,4 TMDI), Norbornandiisocyanat (NBDI), Methylendiphenyldiisocyanat (MDI), Toluidindiisocyanat (TDI), Tetramethylxylylendiisocyanat (TMXDI), Xylylendiisocyanat (MXDI), einzeln oder Mischungen davon, eingesetzt werden.

7. Beschichtungsmittel nach mindestens einem der vorherigen Ansprüche, **dadurch gekennzeichnet, dass** als Bindemittel b) ein hydroxylgruppenhaltiges und/oder amingruppenhaltiges Bindemittel eingesetzt wird.

8. Beschichtungsmittel nach mindestens einem der vorherigen Ansprüche, **dadurch gekennzeichnet, dass** als Bindemittel b) hydroxylgruppenhaltige Polyester, Polyether, Polyacrylate, Polycarbonate und Polyurethane mit einer OH-Zahl von 20 bis 500 mg KOH/g und einer mittleren Molmasse von 250 bis 6000 g/Mol, allein oder in Mischungen, eingesetzt werden.

9. Beschichtungsmittel nach mindestens einem der vorherigen Ansprüche, **dadurch gekennzeichnet, dass** als Bindemittel b) hydroxylgruppenhaltige Polyester oder Polyacrylate mit einer OH-Zahl von 50 bis 250 mg KOH/g und einem mittleren Molekulargewicht von 500 bis 6000 g/mol als Bindemittelkomponenten, allein oder in Mischungen, eingesetzt werden.

10. Beschichtungsmittel nach mindestens einem der vorherigen Ansprüche, **dadurch gekennzeichnet, dass** als Bindemittel b) mindestens ein Addukt von einem Isocyanatotrialkyoxysilan und einem ein- oder mehrwertigen Alkohol enthalten ist.

11. Beschichtungsmittel nach mindestens einem der vorherigen Ansprüche, **dadurch gekennzeichnet, dass** als Bindemittel b) mindestens ein Derivat von hydroxylgruppenhaltigen Polyethern, Polyestern, Polycarbonatdiolen oder Polyacrylaten mit Isocyanatopropyltrialkoxysilan, allein oder in Mischungen, enthalten ist.

12. Beschichtungsmittel nach mindestens einem der vorherigen Ansprüche, **dadurch gekennzeichnet, dass** als Bindemittel b), Aminopropyltriethoxysilan, Aminomethyltrimethoxysilan oder Aminomethyltriethyoxysilan, allein oder in Mischungen, enthalten ist.

13. Beschichtungsmittel nach mindestens einem der vorherigen Ansprüche, **dadurch gekennzeichnet, dass** als Komponente c) Polyisocyanate ausgewählt aus Isophorondiisocyanat (IPDI), Hexamethylendiisocyanat (HDI), 2,2' Di-cyclohexylmethandiisocyanat (2,2'-H12MDI), 2,4' Dicyclohexylmethandiisocyanat (2,4'-H12MDI), 4,4' Dicyclohexylmethandiisocyanat (4,4'-H12MDI), 2 Methylpentandiisocyanat (MPDI), Pentandiisocyanat, 2,2,4 Trimethylhexamethylendiisocyanat (2,2,4-TMDI), 2,4,4 Trimethylhexamethylendiisocyanat (2,4,4 TMDI), Norbornandiisocyanat (NBDI), Methylendiphenyldiisocyanat (MDI), Toluidindiisocyanat (TDI), Tetramethylxylylendiisocyanat (TMXDI), Xylylendiisocyanat (MXDI), einzeln oder Mischungen davon, eingesetzt werden.

14. Beschichtungsmittel nach mindestens einem der vorherigen Ansprüche, **dadurch gekennzeichnet, dass** als Komponente c) Isocyanurate, insbesondere aus IPDI und/oder HDI, eingesetzt werden.

15. Beschichtungsmittel nach mindestens einem der vorherigen Ansprüche, **dadurch gekennzeichnet, dass** als Katalysatoren d) Metallcarboxylate, tert.-Amine, Amidine Guanidine, quarternäre Ammoniumsalze, Tetralkylammoniumsalze, quarternäre Phosphoniumsalze, Metallacetylacetonate, quarternäre Ammoniumacetylacetonate quarternäre Phosphoniumacetylacetonate, Carbonsäuren, Aluminium-, Zirkon-, Titan-und/oder Bor-Alkoholate und/oder Ester davon, phosphor- und stickstoff-haltiger Katalysator, Sulfonsäuren, allein oder in Mischungen, eingesetzt werden.

16. Beschichtungsmittel nach mindestens einem der vorherigen Ansprüche, **dadurch gekennzeichnet, dass** Katalysatoren d) ausgewählt aus Tetraethylammoniumbenzoat, Tetrabutylammoniumhydroxid, Tetraethylammoniumacetylacetonat, Tetrabutylammoniumacetylacetonat, Dibutylzinndilaurat, Zinkacetylacetonat, Zinkethylhexanoat eingesetzt werden.

17. Beschichtungsmittel nach mindestens einem der vorherigen Ansprüche, **dadurch gekennzeichnet, dass** als Zusatzstoffe e) Lösemittel, Stabilisatoren, Lichtschutzmittel, zusätzliche Vernetzer, Füllstoffe, Pigmente, Verlaufsmittel oder Rheologiehilfsmittel, allein oder in Mischungen, eingesetzt werden.

18. Verfahren zur Herstellung der Beschichtungsmittel nach mindestens einem der vorherigen Ansprüche 1-17, durch Mischung der Komponenten a)-f).

19. Verwendung der Beschichtungsmittel nach mindestens einem der vorherigen Ansprüche, in Lackzusammensetzungen, Klebstoffzusammensetzungen, Dichtstoffzusammensetzungen und Metallbeschichtungszusammensetzungen.

## Claims

1. Alkoxysilane-functionalized, allophanate-containing coating compositions comprising
a) 10-99 wt% of at least one binder component from the reaction product of
i) monourethanes i) containing alkoxysilane groups and of the formula 1
Rₙ (OR¹)₃₋ₙ Si-R²-NH-(C=O)-OR³ formula 1,
where Rₙ, R¹, R² and R³ are each independently hydrocarbon radicals having 1-8 carbon atoms, which may be linear, branched or cyclic, or else may be integrated together to form a cyclic system, and n is 0-2,
and
ii) at least one diisocyanate ii),
in a molar ratio of i) to ii) of from 3:1 to 1.5:1, preferably from 2.5:1 to 1.8:1, particularly preferably 2:1;
b) 1-90 wt% of at least one binder component, preferably a hydroxyl-containing or amino-containing binder,
c) 0-50 wt% of at least one aromatic, aliphatic or cycloaliphatic polyisocyanate having an NCO functionality of at least 2, preferably 2.8 to 6,
d) 0-5 wt% of at least one catalyst,
where components a)- d) add up to 100 wt%,
e) optionally auxiliaries and/or additive,
f) optionally solvents.

2. Coating compositions according to Claim 1, wherein Rₙ, R¹, R² and R³ are at the same time or each independently methyl, ethyl, n-propyl, isopropyl, n-butyl, sec-butyl or tert-butyl.

3. Coating compositions according to at least one of the preceding claims, wherein n is 0, R¹ and R³ are at the same time or each independently methyl or ethyl, and R² is at the same time or each independently methyl or propyl.

4. Coating compositions according to at least one of the preceding claims, wherein n is 0 and R² is methyl or propyl, and R¹ is methyl or ethyl and R³ = R¹.

5. Coating compositions according to at least one of the preceding claims, wherein n is 0, R¹ and R³ are methyl and R² is propyl.

6. Coating compositions according to at least one of the preceding claims, wherein the diisocyanates a ii) selected from isophorone diisocyanate (IPDI), hexamethylene diisocyanate (HDI), 2,2'-dicyclohexylmethane diisocyanate (2,2'-H12MDI), 2,4'-dicyclohexylmethane diisocyanate (2,4'-H12MDI), 4,4'-dicyclohexylmethane diisocyanate (4,4'-H12MDI), 2-methylpentane diisocyanate (MPDI), pentane diisocyanate, 2,2,4-trimethylhexamethylene diisocyanate (2,2,4-TMDI), 2,4,4-trimethylhexamethylene diisocyanate (2,4,4-TMDI), norbornane diisocyanate (NBDI), methylenediphenyl diisocyanate (MDI), toluidine diisocyanate (TDI), tetramethylxylylene diisocyanate (TMXDI), xylylene diisocyanate (MXDI), individually or in mixtures thereof are used.

7. Coating compositions according to at least one of the preceding claims, **characterized in that** the binder b) used is a hydroxyl-containing and/or amino-containing binder.

8. Coating compositions according to at least one of the preceding claims, **characterized in that** the binder b) used is hydroxyl-containing polyesters, polyethers, polyacrylates, polycarbonates and polyurethanes having an OH number of 20 to 500 mg KOH/g and a mean molar mass of 250 to 6000 g/mol, alone or in mixtures.

9. Coating compositions according to at least one of the preceding claims, **characterized in that** the binder b) used is hydroxyl-containing polyesters or polyacrylates having an OH number of 50 to 250 mg KOH/g and a mean molecular weight of 500 to 6000 g/mol as binder components, alone or in mixtures.

10. Coating compositions according to at least one of the preceding claims, **characterized in that** the binder b) comprised is at least one adduct of an isocyanatotrialkoxysilane and a mono- or polyhydric alcohol.

11. Coating compositions according to at least one of the preceding claims, **characterized in that** the binder b) comprised is at least one derivative of hydroxyl-containing polyethers, polyesters, polycarbonatediols or polyacrylates with isocyanatopropyltrialkoxysilane, alone or in mixtures.

12. Coating compositions according to at least one of the preceding claims, **characterized in that** the binder b) comprised is aminopropyltriethoxysilane, aminomethyltrimethoxysilane or aminomethyltriethoxysila ne, alone or in mixtures.

13. Coating compositions according to at least one of the preceding claims, **characterized in that** the component c) used is polyisocyanates selected from isophorone diisocyanate (IPDI), hexamethylene diisocyanate (HDI), 2,2'-dicyclohexylmethane diisocyanate (2,2'-H12MDI), 2,4'-dicyclohexylmethane diisocyanate (2,4'-H12MDI), 4,4'- dicyclohexylmethane diisocyanate (4,4'-H12MDI), 2-methylpentane diisocyanate (MPDI), pentane diisocyanate, 2,2,4-trimethylhexamethylene diisocyanate (2,2,4-TMDI), 2,4,4-trimethylhexamethylene diisocyanate (2,4,4-TMDI), norbornane diisocyanate (NBDI), methylenediphenyl diisocyanate (MDI), toluidine diisocyanate (TDI), tetramethylxylylene diisocyanate (TMXDI), xylylene diisocyanate (MXDI), individually or in mixtures thereof.

14. Coating compositions according to at least one of the preceding claims, **characterized in that** the component c) used is isocyanurates, more particularly of IPDI and/or HDI.

15. Coating compositions according to at least one of the preceding claims, **characterized in that** the catalysts d) used are metal carboxylates, tertiary amines, amidines, guanidines, quaternary ammonium salts, tetraalkylammonium salts, quaternary phosphonium salts, metal acetylacetonates, quaternary ammonium acetylacetonates, quaternary phosphonium acetylacetonates, carboxylic acids, aluminium alkoxides, zirconium alkoxides, titanium alkoxides and/or boron alkoxides and/or esters thereof, phosphorus- and nitrogen-containing catalysts, sulphonic acids, alone or in mixtures.

16. Coating compositions according to at least one of the preceding claims, **characterized in that** catalysts d) selected from tetraethylammonium benzoate, tetrabutylammonium hydroxide, tetraethylammonium acetylacetonate, tetrabutylammonium acetylacetonate, dibutyltin dilaurate, zinc acetylacetonate and zinc ethylhexanoate are used.

17. Coating compositions according to at least one of the preceding claims, **characterized in that** the additives e) used are solvents, stabilizers, light stabilizers, additional crosslinkers, fillers, pigments, flow control agents or rheological assistants, alone or in mixtures.

18. Process for producing the coating compositions according to at least one of preceding Claims 1-17 by mixing components a)- f).

19. Use of the coating compositions according to at least one of the preceding claims in paint compositions, adhesive compositions, sealant compositions and metal-coating compositions.

## Revendications

1. Agents de revêtement contenant un allophanate à fonctionnalisation alcoxysilane, contenant :
a) 10 à 99 % en poids d'au moins un composant liant constitué par le produit de réaction de :
i) des monouréthanes contenant des groupes alcoxysilane i) de la formule 1 :
Rₙ(OR¹)₃₋ₙSi-R²-NH-(C=O)-OR³ Formule 1
dans laquelle Rₙ, R¹, R² et R³ signifient indépendamment les uns des autres des radicaux hydrocarbonés de 1 à 8 atomes C, ceux-ci pouvant être linéaires, ramifiés ou cycliques, ou pouvant également être en continuité cycliquement les uns avec les autres, et n signifie 0 à 2,
et
ii) au moins un diisocyanate ii),
en un rapport molaire de i) sur ii) de 3:1 à 1,5:1, de préférence de 2,5:1 à 1,8:1, de manière particulièrement préférée de 2:1,
b) 1 à 90 % en poids d'au moins un composant liant, de préférence un liant contenant des groupes hydroxyle ou contenant des groupes amino,
c) 0 à 50 % en poids d'au moins un polyisocyanate aromatique, aliphatique ou cycloaliphatique, qui présente une fonctionnalité NCO d'au moins 2, de préférence de 2,8 à 6,
d) 0 à 5 % en poids d'au moins un catalyseur,
la somme des composants a) à d) étant de 100 % en poids,
e) éventuellement des adjuvants et/ou des additifs,
f) éventuellement des solvants.

2. Agents de revêtement selon la revendication 1, dans lesquels Rₙ, R¹, R² et R³ signifient simultanément ou indépendamment les uns des autres méthyle, éthyle, n-propyle, iso-propyle, n-butyle, sec-butyle ou tert-butyle.

3. Agents de revêtement selon au moins l'une quelconque des revendications précédentes, dans lesquels n signifie 0, R¹ et R³ signifient simultanément ou indépendamment l'un de l'autre méthyle ou éthyle, et R² signifie simultanément ou indépendamment méthyle ou propyle.

4. Agents de revêtement selon au moins l'une quelconque des revendications précédentes, dans lesquels n signifie 0 et R² signifie méthyle ou propyle, et R¹ signifie méthyle ou éthyle, et R³ = R¹.

5. Agents de revêtement selon au moins l'une quelconque des revendications précédentes, dans lesquels n signifie 0, R¹ et R³ signifient méthyle, et R² signifie propyle.

6. Agents de revêtement selon au moins l'une quelconque des revendications précédentes, dans lesquels des diisocyanates a ii) choisis parmi le diisocyanate d'isophorone (IPDI), le diisocyanate d'hexaméthylène (HDI), le diisocyanate de 2,2'-dicyclohexylméthane (2,2'-H12MDI), le diisocyanate de 2,4'-dicyclohexylméthane (2,4'-H12MDI), le diisocyanate de 4,4'-dicyclohexylméthane (4,4'-H12MDI), le diisocyanate de 2-méthylpentane (MPDI), le diisocyanate de pentane, le diisocyanate de 2,2,4-triméthylhexaméthylène (2,2,4-TMDI), le diisocyanate de 2,4,4-trimétylhexaméthylène (2,4,4-TMDI), le diisocyanate de norbornane (NBDI), le diisocyanate de méthylène-diphényle (MDI), le diisocyanate de toluidine (TDI), le diisocyanate de tétraméthylxylylène (TMXDI), le diisocyanate de xylylène (MXDI) sont utilisés, individuellement ou en mélanges.

7. Agents de revêtement selon au moins l'une quelconque des revendications précédentes, **caractérisés en ce qu'**un liant contenant des groupes hydroxyle et/ou contenant des groupes amino est utilisé en tant que liant b).

8. Agents de revêtement selon au moins l'une quelconque des revendications précédentes, **caractérisés en ce que** des polyesters, polyéthers, polyacrylates, polycarbonates et polyuréthanes contenant des groupes hydroxyle, ayant un indice OH de 20 à 500 mg de KOH/g et une masse molaire moyenne de 250 à 6 000 g/mol, sont utilisés, individuellement ou en mélanges, en tant que liant b).

9. Agents de revêtement selon au moins l'une quelconque des revendications précédentes, **caractérisés en ce qu'**en tant que liant b), des polyesters ou polyacrylates contenant des groupes hydroxyle, ayant un indice OH de 50 à 250 mg de KOH/g et un poids moléculaire moyen de 500 à 6 000 g/mol sont utilisés, individuellement ou en mélanges, en tant que composants liants.

10. Agents de revêtement selon au moins l'une quelconque des revendications précédentes, **caractérisés en ce qu'**au moins un adduit d'un isocyanatotrialcoxysilane et d'un alcool mono- ou polyvalent est contenu en tant que liant b).

11. Agents de revêtement selon au moins l'une quelconque des revendications précédentes, **caractérisés en ce qu'**au moins un dérivé de polyéthers, polyesters, polycarbonate-diols ou polyacrylates contenant des groupes hydroxyle avec un isocyanatopropyltrialcoxysilane est contenu, individuellement ou en mélanges, en tant que liant b).

12. Agents de revêtement selon au moins l'une quelconque des revendications précédentes, **caractérisés en ce que** de l'aminopropyltriéthoxysilane, de l'aminométhyltriméthoxysilane ou de l'aminométhyltriéthoxysilane est contenu, individuellement ou en mélanges, en tant que liant b).

13. Agents de revêtement selon au moins l'une quelconque des revendications précédentes, **caractérisés en ce que** des polyisocyanates, choisis parmi le diisocyanate d'isophorone (IPDI), le diisocyanate d'hexaméthylène (HDI), le diisocyanate de 2,2'-dicyclohexylméthane (2,2'-H12MDI), le diisocyanate de 2,4'-dicyclohexylméthane (2,4'-H12MDI), le diisocyanate de 4,4'-dicyclohexylméthane (4,4'-H12MDI), le diisocyanate de 2-méthylpentane (MPDI), le diisocyanate de pentane, le diisocyanate de 2,2,4-triméthylhexaméthylène (2,2,4-TMDI), le diisocyanate de 2,4,4-trimétylhexaméthylène (2,4,4-TMDI), le diisocyanate de norbornane (NBDI), le diisocyanate de méthylène-diphényle (MDI), le diisocyanate de toluidine (TDI), le diisocyanate de tétraméthylxylylène (TMXDI), le diisocyanate de xylylène (MXDI) sont utilisés, individuellement ou en mélanges, en tant que composant c) .

14. Agents de revêtement selon au moins l'une quelconque des revendications précédentes, **caractérisés en ce que** des isocyanurates, notamment d'IPDI et/ou d'HDI, sont utilisés en tant que composant c).

15. Agents de revêtement selon au moins l'une quelconque des revendications précédentes, **caractérisés en ce que** des carboxylates métalliques, des tert.-amines, des amidines, des guanidines, des sels d'ammonium quaternaires, des sels de tétraalkylammonium, des sels de phosphonium quaternaires, des acétylacétonates de métaux, des acétylacétonates d'ammonium quaternaires, des acétylacétonates de phosphonium quaternaires, des acides carboxyliques, des alcoolates d'aluminium, de zirconium, de titane et/ou de bore et/ou leurs esters, des catalyseurs contenant du phosphore et de l'azote, des acides sulfoniques, sont utilisés, individuellement ou en mélanges, en tant que catalyseurs d).

16. Agents de revêtement selon au moins l'une quelconque des revendications précédentes, **caractérisés en ce que** des catalyseurs d) choisis parmi le benzoate de tétraéthylammonium, l'hydroxyde de tétrabutylammonium, l'acétylacétonate de tétraéthylammonium, l'acétylacétonate de tétrabutylammonium, le dilaurate de dibutylétain, l'acétylacétonate de zinc, l'éthylhexanoate de zinc sont utilisés.

17. Agents de revêtement selon au moins l'une quelconque des revendications précédentes, **caractérisés en ce que** des solvants, des stabilisateurs, des agents photoprotecteurs, des agents de réticulation supplémentaires, des charges, des pigments, des agents de nivellement ou des adjuvants de rhéologie sont utilisés, individuellement ou en mélanges, en tant qu'additifs e).

18. Procédé de fabrication des agents de revêtement selon au moins l'une quelconque des revendications 1 à 17 précédentes, par mélange des composants a) à f).

19. Utilisation des agents de revêtement selon au moins l'une quelconque des revendications précédentes dans des compositions de vernis, des compositions d'adhésifs, des compositions d'agents d'étanchéité et des compositions de revêtement de métaux.
